# DEMANDE DE BREVET EUROPEEN

(11) **EP 2 322 318 A1**
(43) Date de publication de la demande: **18.05.2011**
(21) Numéro de dépôt: 09306088.7
(22) Date de dépôt: 12.11.2009
(51) Int. Cl.: B23Q 11/10, B42D 15/10

(54) **Procédé d'usinage d'un corps de carte et station de préparation associé**

(71) Demandeur: Gemalto SA, 92190 Meudon (FR)
(72) Inventeur: Durano, Frederic, 92197, MEUDON (FR); Froger, Alexis, 92197, MEUDON (FR); Poitrasson, Eric, 92197, MEUDON (FR); Renouard, Jeremy, 92197, MEUDON (FR); Spinelli, Laurent, 92197, MEUDON (FR)
(74) Mandataire: Cour, Pierre

(57) **Abrégé**

La présente invention concerne un procédé d'usinage d'un corps de carte (1) comportant au moins une étape de refroidissement dudit corps de carte (1) à une température inférieure ou égale à -20° C par un fluide réfrigérant.

L'invention concerne également une station de préparation d'un corps de carte (1) pour la mise en oeuvre du procédé d'usinage décrit précédemment, comportant un module d'usinage (12) et un module de refroidissement (11) associé amenant tout ou partie dudit corps de carte (1) à une température inférieure ou égale à -20°C.

## Description

La présente invention se rapporte au domaine technique des procédés d'usinage, et plus particulièrement aux procédés d'usinage de corps de cartes.

De façon générale, les procédés d'usinage dont le but est de former des cavités dans des corps de cartes de matières comme les matières plastiques, par exemple les matières à base de polychlorure de vinyle (PVC) ou encore à base d'acrylonitrile butadiène styrène (ABS), sont bien connus. Ces cavités pouvant ultérieurement recevoir des objets tels que des hologrammes, puces électroniques ou bien encore des bandes magnétiques. Cependant, ces mêmes procédés sont difficilement applicables à d'autres matières comme par exemple les matières biodégradables, car ils peuvent entrainer des problèmes de dégradation de la matière liés à la chaleur générée par le procédé d'usinage ainsi qu'un possible ramollissement du corps de carte. Ils peuvent également, du fait même de la structure de ces matériaux, engendrer des bavures et imperfections importantes.

Par matière biodégradable, on entend une matière qui sous l'action d'organismes vivants extérieure à sa substance peut se décomposer en éléments divers dépourvus d'effets dommageable sur le milieu naturel, et ce dans un laps de temps d'au maximum 1 an, comme par exemple l'acide polylactique (PLA) facilement biodégradable par compostage ou encore des matières fibreuses d'origine végétale comme le papier ou le carton.

Pour pallier à ces inconvénients, une solution connue est de former les cavités au moment du moulage du corps de carte. Cependant cette solution rend complexe toute modification et personnalisation ultérieure de la carte comme par exemple l'apposition d'hologrammes, de bandes magnétiques ou autres.

L'invention a donc pour objectif de pallier à ces inconvénients de l'art antérieur et de proposer un procédé d'usinage de corps de carte permettant un usinage précis du corps de carte.

Ainsi, la présente invention concerne un procédé d'usinage d'un corps de carte comportant au moins une étape de refroidissement dudit corps de carte à une température inférieure ou égale à -20° C par un fluide réfrigérant.

Par cette étape de refroidissement, on obtient une rigidification de la matière facilitant soit toute opération d'usinage ultérieure, soit l'enlèvement de bavures après usinage.

Selon un aspect de l'invention, le corps de carte est réalisé en matière biodégradable.

Selon un aspect, la température du corps de carte après refroidissement est inférieure ou égale à -30° C.

Selon un mode de réalisation, l'étape de refroidissement du corps de carte se déroule antérieurement à une étape d'usinage.

Selon un autre mode de réalisation, l'étape de refroidissement du corps de carte est intercalée entre une étape d'usinage et une étape de nettoyage de cavités usinées dudit corps de carte.

Selon un autre mode de réalisation, l'étape de refroidissement du corps de carte est réalisée uniquement au niveau des zones présentant des bavures d'usinages.

Selon un autre mode de réalisation, l'étape de refroidissement du corps de carte est réalisée sur l'ensemble du corps de carte.

Selon un autre mode de réalisation, l'étape de refroidissement du corps de carte est réalisée uniquement au niveau des zones d'usinage dudit corps de carte.

Selon un autre mode de réalisation, l'étape de refroidissement du corps de carte est réalisée par immersion dudit corps de carte dans un fluide réfrigérant.

Selon un autre mode de réalisation, l'étape de refroidissement du corps de carte est réalisée par projection d'au moins un jet de fluide réfrigérant sur le corps de carte.

Selon un aspect de l'invention, le fluide réfrigérant est de l'azote liquide.

Selon un autre aspect de l'invention, le corps de carte est réalisé en acide polylactique (PLA).

Selon un autre aspect de l'invention, le corps de carte est réalisé en une matière fibreuse d'origine végétale.

La présente invention concerne également une station de préparation d'un corps de carte pour la mise en oeuvre du procédé d'usinage défini ci-dessus, comprenant un module d'usinage et un module de refroidissement associé amenant tout ou partie dudit corps de carte à une température inférieure ou égale à -20°C.

Selon un autre mode de réalisation, le module de refroidissement possède un bac d'immersion du corps de carte dans un fluide de refroidissement.

Selon un autre mode de réalisation, le module de refroidissement possède au moins une buse de projection du fluide de refroidissement.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente sous forme d'un organigramme un procédé d'usinage selon un premier mode de réalisation,
- la figure 2 représente sous forme d'un organigramme un procédé d'usinage selon un second mode de réalisation,
- la figure 3 représente un schéma simplifié d'une station de préparation selon un premier mode de réalisation,
- la figure 4 représente un schéma simplifié d'une station de préparation selon un deuxième mode de réalisation,
- la figure 5 représente un schéma simplifié d'une station de préparation selon un troisième mode de réalisation,

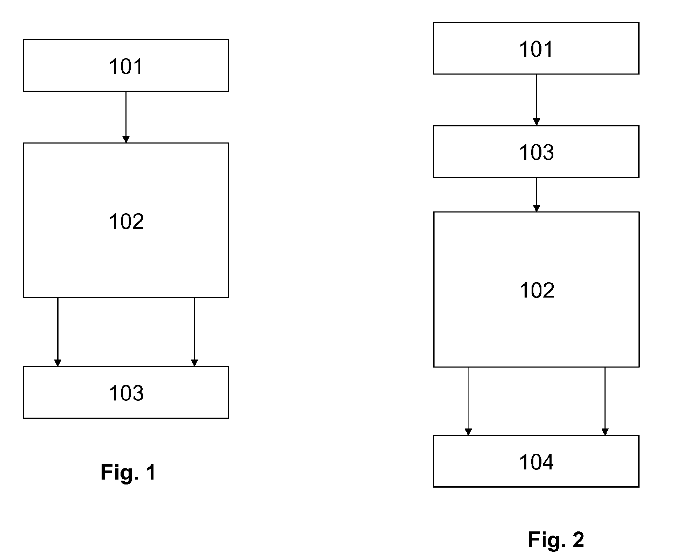

La figure 1 montre sous forme d'un organigramme différentes étapes du procédé d'usinage d'un corps de carte.

Selon une étape 101 facultative de transport, on achemine un corps de carte grâce à un moyen de transport, par exemple du type convoyeur, vers un module de refroidissement. Puis selon une étape 102, on refroidit le corps de carte par un fluide réfrigérant afin que ledit corps de carte atteigne une température inférieure ou égale à -20° C. De préférence la température à atteindre est inférieure ou égale à -30° C.

Plus en détail, l'étape de refroidissement 102 permet avantageusement d'éviter les problèmes de chauffe, de dégradation et de ramollissement du corps de carte. De plus cette étape de refroidissement a pour effet d'augmenter la dureté ou rigidité du corps de carte. Du fait de cette augmentation de dureté, le corps de carte est plus facile à usiner et les bavures et imperfections liées à l'usinage sont réduites.

L'étape de refroidissement 102 peut être réalisée par immersion du corps de carte dans le fluide réfrigérant selon un mode de réalisation. Dans ce cas, l'étape de refroidissement est réalisée sur l'ensemble du corps de carte.

On entend par « l'ensemble du corps de carte » la surface totale dudit corps de carte ainsi que son épaisseur totale.

L'étape de refroidissement 102 peut également être réalisée par la projection d'au moins un jet de fluide réfrigérant au moyen de buses de projection.

Ce mode de réalisation permet non seulement un refroidissement sur l'ensemble du corps de carte, mais également un refroidissement plus localisé, c'est-à-dire un refroidissement uniquement au niveau des zones des cavités à usiner. Un avantage supplémentaire de ce dernier aspect particulier est que l'étape de refroidissement nécessite moins de fluide de refroidissement et est donc plus économique.

Enfin, selon une étape 103, on usine le corps de carte par un module d'usinage, de type fraise par exemple.

Selon une alternative du procédé représenté sous forme d'un organigramme par la figure 2, on effectue l'étape de refroidissement 102 après l'étape d'usinage 103 du corps de carte. En effet les bavures générées par l'étape d'usinage 103 sont ainsi rigidifiées et il est donc facile de les éliminer lors d'une étape ultérieure de nettoyage 104 des cavités usinées.

Cette solution peut être mise en oeuvre par un refroidissement de l'ensemble du corps de carte, mais également par un refroidissement réalisé uniquement au niveau des zones présentant des bavures d'usinage.

Pour tous les modes de réalisation, on peut utiliser comme fluide de refroidissement de l'azote liquide.

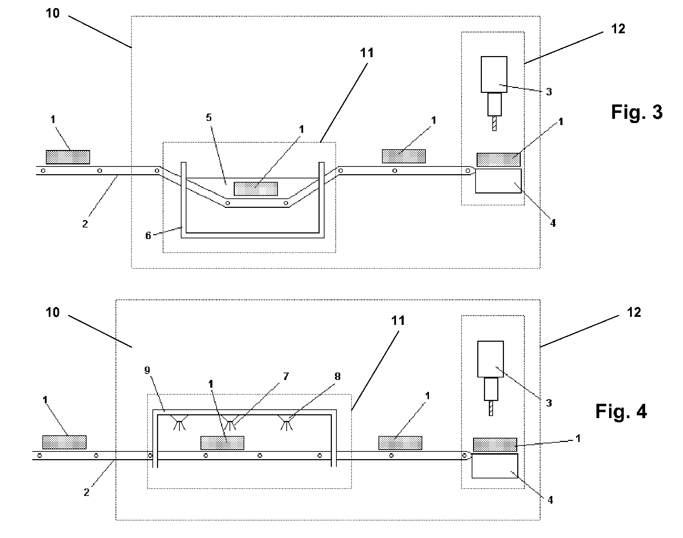

En référence aux figures 3 à 5, on va maintenant décrire trois modes de réalisation alternatifs permettant la mise en oeuvre des procédés décrits ci-dessus. Sur ces figures, les éléments identiques portent les mêmes numéros de références.

Sur la figure 3, on y voit un moyen de transport 2, par exemple un convoyeur ou un tapis roulant, qui transporte les corps de carte 1 vers différents modules de traitement.

En particulier on y voit une station de préparation 10 du corps de carte 1 comportant un module de refroidissement 11 permettant le refroidissement du corps de carte 1 à une température inférieure ou égale à -20° C et un module d'usinage 12.

Le module de refroidissement comporte, dans le mode de réalisation illustré par la figure 3, un bac de refroidissement 6 contenant du fluide réfrigérant 5, par exemple de l'azote liquide.

Le module d'usinage comporte, dans le mode de réalisation illustré par la figure 3, un socle d'usinage 4 et d'un outil d'usinage 3, par exemple de type fraise.

Le module de refroidissement pouvant être aussi bien être placé en amont (comme montré sur la figure 3), qu'en aval du module d'usinage.

Le mode de réalisation de la figure 4, se différencie de celui de la figure 3 par le fait que le module de refroidissement comporte un tunnel de refroidissement 9 contenant au moins une buse de projection 8 propulsant un jet de fluide de refroidissement 7 sur le corps de carte 1.

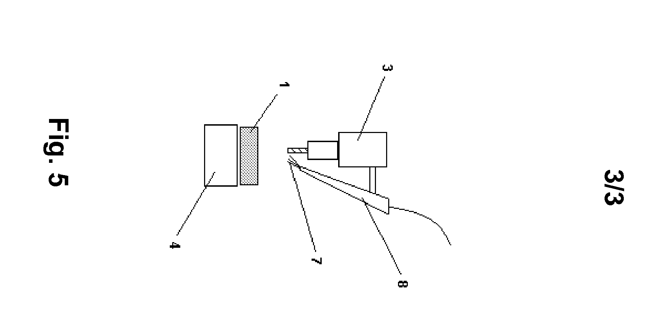

Le mode de réalisation de la figure 5, se différencie de ceux des figures 3 et 4 par le fait que le module de refroidissement comporte au moins une buse de projection 8 propulsant un jet de fluide de refroidissement 7 sur le corps de carte 1**,** fixée sur l'outil d'usinage 3.

On comprend donc qu'aussi bien le procédé que la station de préparation d'un corps de carte permet d'augmenter la précision d'usinage de cavité dans un corps de carte.

## Revendications

1. Procédé d'usinage d'un corps de carte (1), **caractérisé en ce que** ledit procédé d'usinage comporte au moins une étape de refroidissement dudit corps de carte à une température inférieure ou égale à -20° C par un fluide réfrigérant.

2. Procédé d'usinage selon la revendication 1, **caractérisé en ce que** le corps de carte (1) est réalisé en matière biodégradable.

3. Procédé d'usinage selon les revendications précédentes, **caractérisé en ce que** la température du corps de carte (1) après refroidissement est inférieur ou égale à -30° C.

4. Procédé d'usinage selon les revendications précédentes, **caractérisé en ce que** l'étape de refroidissement du corps de carte (1) se déroule antérieurement à une étape d'usinage.

5. Procédé d'usinage selon les revendications 1 à 3, **caractérisé en ce que** l'étape de refroidissement du corps de carte (1) est intercalée entre une étape d'usinage et une étape de nettoyage de cavités usinées dudit corps de carte.

6. Procédé d'usinage selon la revendication 4, **caractérisé en ce que** l'étape de refroidissement du corps de carte (1) est réalisée uniquement au niveau des zones présentant des bavures d'usinages.

7. Procédé d'usinage selon l'une de revendications précédentes, **caractérisé en ce que** l'étape de refroidissement du corps de carte (1) est réalisée sur l'ensemble du corps de carte.

8. Procédé d'usinage selon l'une des revendications 1 à 5, **caractérisé en ce que** l'étape de refroidissement du corps de carte (1) est réalisée uniquement au niveau des zones d'usinage dudit corps de carte.

9. Procédé d'usinage selon l'une des revendications 1 à 5 et 7, **caractérisé en ce que** l'étape de refroidissement du corps de carte (1) est réalisée par immersion dudit corps de carte (1) dans un fluide réfrigérant (5).

10. Procédé d'usinage selon l'une des revendications 1 à 8, **caractérisé en ce que** l'étape de refroidissement du corps de carte (1) est réalisée par projection d'au moins un jet de fluide réfrigérant (7) sur le corps de carte (1).

11. Procédé d'usinage selon l'une des revendications précédentes, **caractérisé en ce que** le fluide réfrigérant est de l'azote liquide.

12. Procédé d'usinage selon l'une des revendications précédentes, **caractérisé en ce que** le corps de carte (1) est réalisé en acide polylactique (PLA).

13. Procédé d'usinage selon l'une des revendications 1 à 11 **caractérisé en ce que** le corps de carte (1) est réalisé en une matière fibreuse d'origine végétale.

14. Station de préparation d'un corps de carte (1) pour la mise en oeuvre du procédé d'usinage selon la revendication 1, comportant un module d'usinage (12) et un module de refroidissement (11) associé amenant tout ou partie dudit corps de carte (1) à une température inférieure ou égale à -20°C.

15. Station de préparation selon la revendication 14, **caractérisé en ce que** le module de refroidissement (11) comporte un bac d'immersion (6) du corps de carte dans un fluide de refroidissement (5).

16. Station de préparation selon la revendication 14, **caractérisé en ce que** le module de refroidissement (11) comporte au moins une buse de projection (8) du fluide de refroidissement.
